# EUROPEAN PATENT SPECIFICATION

(11) **EP 2 584 269 B1**
(45) Date of publication and mention of the grant of the patent: **30.04.2014**
(21) Application number: 12188519.8
(22) Date of filing: 15.10.2012
(51) Int. Cl.: F24C 7/08, G01K 1/14

(54) **A cooking device**
Kochvorrichtung
Dispositif de cuisson

(30) Priority: 21.10.2011 TR 201110501
(43) Date of publication of application: 24.04.2013
(73) Proprietor: Vestel Beyaz Esya Sanayi ve Ticaret A.S., 45030 Manisa (TR)
(72) Inventor: Yaz, Erdinc, 35050 Izmir (TR); Orhan, Hakan, 35050 Izmir (TR); Yavuz, Cevdet, 45030 Manisa (TR)
(74) Representative: Cayli, Hülya

(56) References cited:
- DE-A1- 3 241 092
- DE-C1- 19 834 643
- DE-C1- 19 834 644
- GB-A- 1 008 877
- US-A- 4 491 680

## Description

### Technical Field

The present invention relates to cooking devices comprising thermostat.

### Prior Art

The cooking devices comprising at least one cooking compartment such as oven can comprise at least one thermostat which is positioned in the compartment and controls working temperature of the cooking device. In the state of the art, said thermostat is directly connected to a wall in the cooking compartment or positioned inside a slot located in a wall. When the thermostat is connected to the wall directly, electrical leakage to be occurred in the thermostat (e.g. an arc formation) reduces the safety of the cooking device. Besides, when the thermostat is positioned in a slot, heat exchange with the environment decreases and working efficiency reduces.

The patent document no GB1370638A of the state of the art discloses a cooking device. Said cooking device comprises a thermostat controlling the temperature of the device. The thermostat is positioned in a slot located inside a tube. However in said embodiment, the heat exchange of the thermostat with the environment is low, and the thermostat does not work efficiently.

Documents DE 198 34 643, GB 1 008 877 and US 4 491 680 disclose further state of the art relevant to the invention.

### Brief Description of the Invention

The cooking device of the present invention comprises at least one inner compartment; at least one wall provided in the inner compartment; at least one thermostat in a bar form which is provided in the inner compartment, which measures the temperature of the inner compartment and controls working temperature, which comprises at least one cylindrical body; and at least one connection unit in which the thermostat is placed and which is suitable for assembling to said wall. Said connection unit comprises at least one body; at least one stopper extending in the form of a projection from the body and to which an end of a thermostat in the bar form contacts when the thermostat is placed in the connection unit; at least one holding lug comprising at least one hole through which the thermostat is able to pass and extending as a projection from the body; at least one upper holder which supports cylindrical body of the thermostat from upwards and which comprises at least one projection for supporting the thermostat from the lateral surface of the cylindrical body; and at least one lower holder which supports the body of the thermostat from downwards of the lateral surface of the body and comprises at least one projection for supporting the thermostat from lateral surface of the cylindrical body.

The thermostat in the cooking device of the present invention which can be an electric or gas furnace is fixed to a wall of the cooking device via said connection unit. Therefore, while on the one hand possible electrical leakage to be occurred on the wall of the cooking device from the thermostat is prevented; on the other hand efficient operation of the thermostat is ensured since the thermostat is kept in the open area.

### Objectives of the Invention

An aim of the invention is to develop a cooking device comprising at least one thermostat.

Another aim of the present invention is to develop a cooking device comprising at least one connection unit for fixing the thermostat to at least one inner compartment of the device.

The other aim of the present invention is to develop a cooking device whose thermostat works efficiently.

Another aim of the present invention is to develop a cooking device which is cost effective and practical to produce and safe to use.

### Description of the Drawings

Exemplary embodiments of the cooking device of the present invention and a connection unit comprised by the device are shown in attached drawings wherein;
Figure 1 is a perspective view of the cooking device.
Figure 2 is a perspective view of the connection unit.
Figure 3 is a perspective view of a thermostat in a state semi-assembled to the connection unit.
Figure 4 is a perspective view of a thermostat in a state settled in the connection unit.

The parts in the figures are individually enumerated and the corresponding terms of reference numbers are given as follows:
- Cooking device: (O)
- Inner compartment: (R)
- Wall: (U)
- Thermostat: (T)
- Connection unit: (P)
- Fixing element: (S)
- Cylindrical body: (Y)
- Base: (Z)
- Body: (1)
- Stopper: (2)
- Holding lug: (3)
- Hole: (3a)
- Upper holder: (4)
- Projection: (4a, 5a)
- Lower holder: (5)
- Slot: (6)

### Description of the Invention

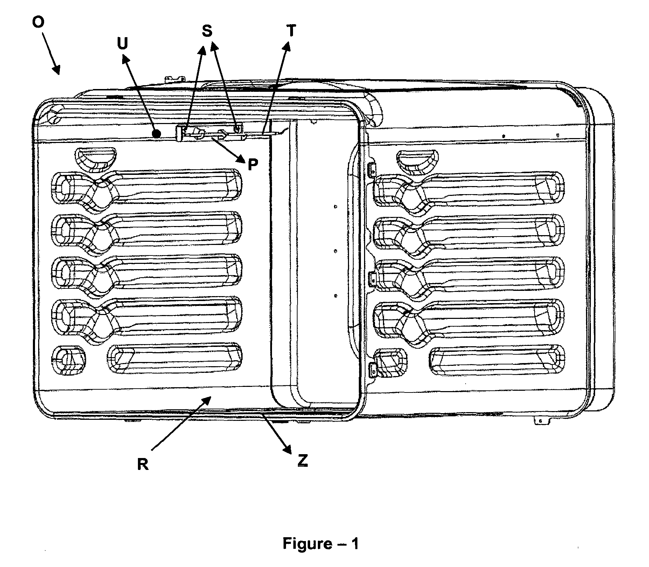

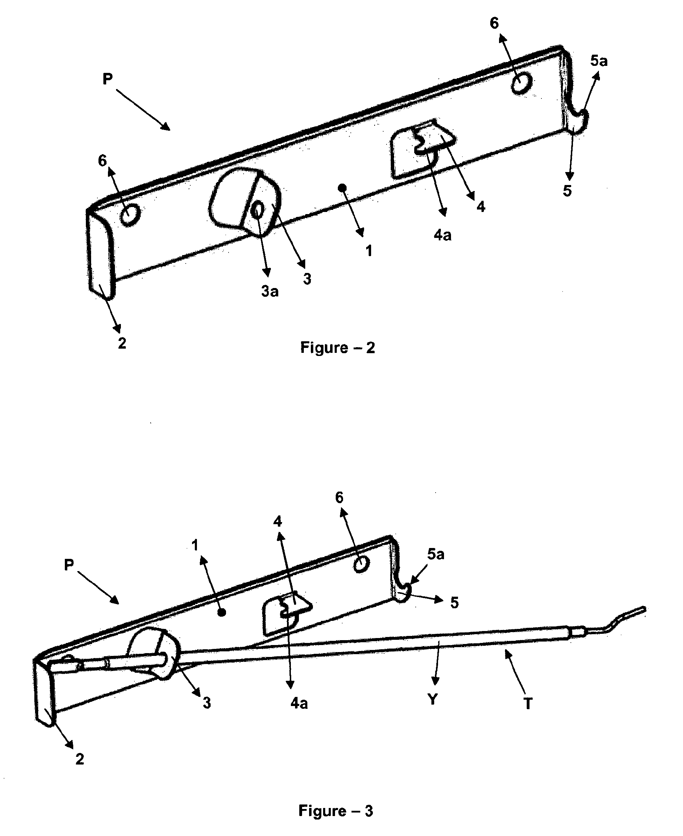

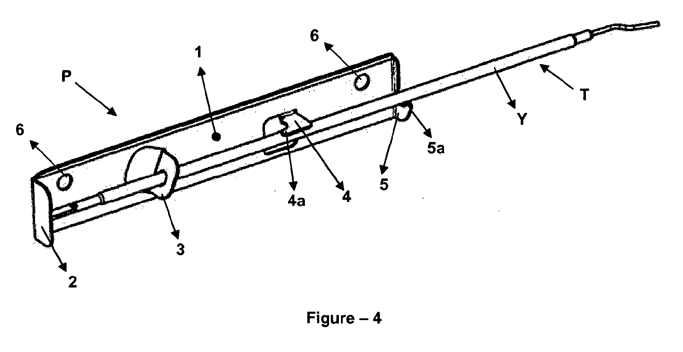

The cooking device (0) of the present invention, an exemplary view of which is shown in figure 1, comprises at least one inner compartment (R); at least one wall (U) provided in the inner compartment (R); at least one thermostat in a bar form which is provided in the inner compartment (R), which measures the temperature of the inner compartment (R) and controls working temperature of the cooking device, which comprises at least one cylindrical body (Y); and at least one connection unit (P) in which the thermostat is placed and which is suitable for assembling to said wall (U). The connection unit (P), whose detailed views are shown in figures 2-4, comprises at least one body (1) preferably made of sheet metal; at least one stopper (2) extending in the form of a projection from the body (1) and to which an end of a thermostat (T) in the bar form contacts when the thermostat (T) is placed in the connection unit (P); at least one holding lug (3) comprising at least one hole (3a) through which the thermostat (T) is able to pass and extending as a projection from the body (1); at least one upper holder (4) which supports cylindrical body (Y) of the thermostat (T) from upwards and which comprises at least one projection (4a) for supporting the thermostat (T) from the lateral surface of the cylindrical body (Y); and at least one lower holder (5) which supports the body (Y) of the thermostat (T) from downwards of the lateral surface of the body (Y) and comprises at least one projection (5a) for supporting the thermostat (T) from lateral surface of the cylindrical body (Y). Said connection unit (P) further comprises at least one slot (6) for assembling the unit (P) to the wall (U). By passing a fixing element (S) (e.g. a screw) through said slot (6), the connection unit (P) is able to be assembled to the wall (U) via fixing this fixing element (S) to the wall (U).

In a preferred embodiment of the invention, said holding lug (3) is in the structure of a plate which extends preferably vertically from the body (1) so as to make an angle with the horizontal axis (in other words, an axis parallel with a base (Z) of the cooking device (O)). In this embodiment, the hole (3a) located in the holding lug (3) is wider than the width of body (Y) of the thermostat (T). Therefore, when the thermostat (T) is brought to a horizontal position after being passed through the hole (3a) and moved in the vertical axis, said thermostat (T) is stuck in the hole (3a).

In another preferred embodiment of the invention, the lower holder (5) is in a plate structure which is perpendicular to the horizontal axis and extends preferably vertically from the body (1). In this embodiment, when the thermostat (T) is placed in the connection unit (P), the thermostat (T) remains between the body (1) and the projection (5a) located in the lower holder (5) on the one hand, and said thermostat (T) is supported via the lower holder (5) from downwards on the other hand. Thus; the movement of the thermostat (T) in the vertical and horizontal axis is able to be prevented.

In another preferred embodiment of the invention, the upper holder (4) is in a plate structure which is parallel to the horizontal axis and extends preferably vertically from the body (1). In this embodiment, after the thermostat (T) is placed in the connection unit, the upper holder (4) is brought to a vertical position with respect to the horizontal axis by being moved (by deforming mechanically). Accordingly, while the thermostat (T) remains between the body and the projection (4a) located in the upper holder (4) on the one hand, said thermostat (T) is supported via the upper holder (4) from upwards on the other hand. Thus; the movement of the thermostat (T) in the vertical and horizontal axis is able to be prevented.

In the cooking device (0) of the present invention, the thermostat (T) in the bar form is passed through the hole (3a) located in the holding lug (3) and pushed until an end of the thermostat (T) contacts with the stopper (2). Then, the thermostat (T) is moved firstly upwards in the vertical axis and then towards the connection unit (P) in the horizontal axis; after that the thermostat (T) is seated in the lower holder (5) so as to remain between the projection (5a) and the body (1). Then, the upper holder (4) is brought to a vertical position with respect to the horizontal axis by being moved such that the thermostat (T) remains between the projection (4a) and the body (1). Accordingly, movement of the thermostat (T) with respect to the connection unit is able to be prevented.

In another preferred embodiment of the invention, the connection unit (P) comprises an insulating coating. In this embodiment, since the connection unit (P) with insulating coating is provided between the thermostat (T) and the wall (U) of the cooking device (O), an electrical leakage to be occurred in the thermostat (T) (for instance an arc to be formed from the thermostat (T) to the wall (U)) is prevented. Thus, operation of the cooking device (0) in a safe manner is ensured.

In a preferred embodiment of the invention, the body (1) of the connection unit (P) is made of sheet material. In this embodiment, the stopper (2) the holding lug (3), the upper holder (4), and the lower holder (5), which extend from the body (1) in the form of a projection, are able to be formed after the body (1) is cut along a template, by bending the cut piece with respect to the body (1) or by bending at least one side of the body (1) directly. Accordingly, cost effective and practical production of the connection unit (P) is ensured. The thermostat (T) in the cooking device (0) of the present invention which can be an electric or gas furnace is fixed to a wall (U) of the cooking device (0) via said connection unit (P). Therefore, while on the one hand possible electrical leakage to be occurred to the wall of the cooking device (0) from the thermostat (T) is prevented; on the other hand efficient operation of the thermostat is ensured since the thermostat (T) is kept in the open area (in other words, due to not positioning inside a slot).

## Claims

1. A cooking device (0) comprising at least one inner compartment (R); at least one wall (U) provided in the inner compartment (R); at least one thermostat (T) in a bar form which is provided in the inner compartment (R), which measures the temperature of the inner compartment (R) and controls working temperature of the cooking device (O), and which comprises at least one cylindrical body (Y); and at least one connection unit (P) in which the thermostat (T) is placed and which is suitable for assembling to said wall (U) **characterized in that** the connection unit (P) comprises
- at least one body (1);
- at least one stopper (2) extending in the form of a projection from the body (1) and to which an end of the thermostat in the bar form contacts when the thermostat (T) is placed in the connection unit (P);
- at least one holding lug (3) comprising at least one hole (3a) through which the thermostat (T) is able to pass and extending as a projection from the body (1);
- at least one upper holder (4) which supports cylindrical body (Y) of the thermostat (T) from upwards and which comprises at least one projection (4a) for supporting the thermostat (T) from the lateral surface of the cylindrical body (Y); and
- at least one lower holder (5) which supports the body (Y) of the thermostat (T) from downwards of the lateral surface of the body (Y) and comprises at least one projection (5a) for supporting the thermostat (T) from lateral surface of the cylindrical body (Y).

2. A cooking device (0) according to claim 1 **characterized in that** the connection unit (P) is made of sheet material.

3. A cooking device (0) according to claim 1 **characterized in that** the connection unit (P) comprises at least one slot (6) for being assembled to the wall (U).

4. A cooking device (0) according to claim 3 **characterized by** comprising at least one fixing element (S) which is fixed to the wall (U) by being passed through said slot (6).

5. A cooking device (0) according to claim 1 **characterized in that** the holding lug (3) is in the structure of a plate which extends from the body (1) so as to make an angle with the horizontal axis.

6. A cooking device (0) according to claim 5 **characterized in that** the holding lug (3) is in a structure which extends vertically from the body (1).

7. A cooking device (0) according to claim 5 **characterized in that** the hole (3a) located in the holding lug (3) is wider than the width of body (Y) of the thermostat (T).

8. A cooking device (0) according to claim 1 **characterized in that** the lower holder (5) is in a plate structure which is perpendicular to the horizontal axis.

9. A cooking device (0) according to claim 8 **characterized in that** the lower holder (5) is in a structure which extends vertically from the body (1).

10. A cooking device (0) according to claim 1 **characterized in that** the upper holder (4) is in a plate structure which is parallel to the horizontal axis.

11. A cooking device (0) according to claim 8 **characterized in that** the upper holder (4) is in a structure which extends vertically from the body (1).

12. A cooking device (0) according to claim 1 **characterized in that**, the stopper (2) the holding lug (3), the upper holder (4), and the lower holder (5), which extend from the body (1) in the shape of a projection, are formed after the body (1) is cut along a template, by bending the cut piece with respect to the body (1) or by bending at least one side of the body (1) directly.

## Patentansprüche

1. Kochgerät (O) mit zumindest einer inneren Aufnahme (R), mit zumindest einer Wand (U), die in der inneren Aufnahme (R) vorgesehen ist, mit zumindest einem Thermostaten (T) in einer Stab- oder Stangenform, der in der inneren Aufnahme (R) vorgesehen ist und der die Temperatur der inneren Aufnahme (R) zu messen in der Lage ist, um die Arbeitstemperatur der Kocheinrichtung (O) zu steuern, und der zumindest einen zylindrischen Körper (Y) aufweist; und mit zumindest einer Verbindungseinheit (P), in welcher der Thermostat (T) angeordnet ist und die geeignet ist, an der Wand (U) angebracht zu werden, **dadurch gekennzeichnet, dass** die Verbindungseinheit (P) aufweist,
- zumindest einen Körper (1);
- zumindest eine Stoppeinrichtung (2), die sich in der Form eines Vorsprungs von dem Körper (1) erstreckt und an der ein Ende des Thermostaten in Stab- oder Stangenform berührend anliegt, wenn der Thermostat (T) in der Verbindungseinheit (P) platziert ist; zumindest eine Halteeinrichtung (3), welche zumindest eine Öffnung (3a) aufweist, durch welche der Thermostat (T) in der Lage ist, hindurch zu greifen, und die als Vorsprung von dem Korper (1) erscheint, oder sich so erstreckt;
- zumindest einen oberen Halter (4), der den zylindrischen Körper (Y) des Thermostaten (T) von oben stützt und der zumindest einen Vorsprung (4a) aufweist, um den Thermostaten (T) von einer lateralen Seite des zylindrischen Körpers (Y) zu stürzen, und
- zumindest einen unteren Halter (5), der den Körper (Y) des Thermostaten (T) von unten stützt, bezogen auf die laterale Oberfläche des Körpers (Y) und der zumindest einen Vorsprung (5a) zum Stützen des Thermostaten (T) von einer lateralen Oberfläche des zylindrischen Körpers (Y) aufweist.

2. Kocheinrichtung (O) nach Anspruch 1, wobei die Verbindungseinheit (P) aus Blech geformt ist.

3. Kocheinrichtung (O) nach Anspruch 1, wobei die Verbindungseinheit (P) zumindest einen Durchgang (6) aufweist, um mit der Wand (U) verbunden zu werden.

4. Kocheinrichtung (O) nach Anspruch 3, wobei sie zumindest ein Montageelement (S) aufweist, welches an der Wand (U) hindurchgreifend durch den Durchgang (6) angeordnet ist.

5. Kocheinrichtung (O) nach Anspruch 1, wobei die Halteeinrichtung (3) in der Form einer Platte ausgebildet ist, die von dem Körper (1) absteht, unter Bildung eines Winkels mit der horizontalen Achse.

6. Kocheinrichtung (O) nach Anspruch 5, wobei die Halteeinrichtung (3) in einer Form ausgebildet ist, die vertikal von dem Körper (1) absteht.

7. Kocheinrichtung (O) nach Anspruch 5, wobei die Öffnung (3a) in der Halteeinrichtung (3) breiter ist als die Breite des Körpers (Y) des Thermostaten (T).

8. Kocheinrichtung (O) nach Anspruch 1, wobei der untere Halter (5) eine Plattenform aufweist, die senkrecht zu der horizontalen Achse ausgerichtet ist.

9. Kocheinrichtung (O) nach Anspruch 8, wobei der untere Halter (5) in einer Form ausgebildet ist, die sich vertikal vom Körper (1) erstreckt.

10. Kocheinrichtung (O) nach Anspruch 1, wobei der obere Halter (4) in einer Plattenform ausgebildet ist, die parallel zur horizontalen Achse ausgerichtet ist.

11. Kocheinrichtung (O) nach Anspruch 8, wobei der obere Halter (4) in einer Form ausgebildet ist, die vertikal vom Rumpf (1) absteht.

12. Kocheinrichtung (O) nach Anspruch 1, **dadurch gekennzeichnet, dass** die Stoppeinrichtung (2), die Haltevorrichtung (3), der obere Halter (4) und der untere Halter (5), die sich von dem Rumpf (1) in der Form eines Vorsprungs erstrecken, ausgebildet werden, nachdem der Rumpf (1) längst einer Schablone ausgeschnitten wurde, dies durch Abbiegen des ausgeschnittenen Stücks relativ zu dem Rumpf oder Körper (1) oder durch direktes Biegen an zumindest einer Seite des Rumpfes oder Körpers (1).

## Revendications

1. Dispositif de cuisson (O) comprenant au moins un compartiment intérieur (R) : au moins une paroi (U) prévue dans le compartiment intérieur (R) ; au moins un thermostat (T) sous forme de barre qui est prévu dans le compartiment intérieur (R), qui mesure la température du compartiment intérieur (R) et commande la température de fonctionnement du dispositif de cuisson (O), et qui comprend au moins un corps cylindrique (Y) ; et au moins une unité de connexion (P) dans laquelle le thermostat (T) est positionné et qui est appropriée pour l'assemblage à ladite paroi (U), **caractérisé en ce que** l'unit de connexion (P) comprend :
- au moins un corps (1) :
- au moins une butée (2) s'étendant sous forme de saillie à partir du corps (1) et avec laquelle une extrémité du thermostat sous forme de barre entre en contact lorsque le thermostat (T) est positionné dans l'unité de connexion (P);
- au moins une oreille de retenue (3) comprenant au moins un trou (3a) à travers lequel le thermostat (T) est capable de passer et s'étendant sous forme de saillie à partir du corps (1) ;
- au moins un support supérieur (4) qui supporte un corps cylindrique (Y) du thermostat (T) à partir du haut et qui comprend au moins une saillie (4a) pour supporter le thermostat (T) à partir de la surface latérale du corps cylindrique (Y) ; et
- au moins un support inférieur (5) qui supporte le corps (Y) du thermostat (T) à partir du bas de la surface latérale du corps (Y) et comprend au moins une saillie (5a) pour supporter le thermostat (T) à partir de la surface latérale du corps cylindrique (Y).

2. Dispositif de cuisson (O) selon la revendication 1, **caractérisé en ce que** l'unité de connexion (P) est faite de matériau en feuille.

3. Dispositif de cuisson (O) selon la revendication 1, **caractérisé en ce que** l'unité de connexion (P) comprend au moins une fente (6) pour être assemblée à la paroi (U).

4. Dispositif de cuisson (O) selon la revendication 3, **caractérisé en ce qu'**il comprend au moins un élément de fixation (S) qui est fixé à la paroi (U) en passant à travers ladite fente (6).

5. Dispositif de cuisson (O) selon la revendication 1, **caractérisé en ce que** l'oreille de retenue (3) présente la structure de plaque qui s'étend à parti du corps (1) afin de réaliser un angle avec l'axe horizontal.

6. Dispositif de cuisson (O) selon la revendication 5, **caractérisé en ce que** l'oreille de retenue (3) présente une structure qui s'étend verticalement à partir du corps (1).

7. Dispositif de cuisson (O) selon la revendication 5, **caractérisé en ce que** le trou (3a) situé dans l'oreille de retenue (3) est plus large que la largeur du corps (Y) du thermostat (T).

8. Dispositif de cuisson (O) selon la revendication 1, **caractérisé en ce que** le support inférieur (5) présente une structure de plaque qui est perpendiculaire à l'axe horizontal.

9. Dispositif de cuisson (O) selon la revendication 8, caractérisé en ce ue le support inférieur (5) présente une structure qui s'étend verticalement à partir du corps (1).

10. Dispositif de cuisson (O) selon la revendication 1, **caractérisé en ce que** le support supérieur (4) présente une structure de plaque qui est parallèle à l'axe horizontal.

11. Dispositif de cuisson (O) selon la revendication 8, **caractérisé en ce que** le support supérieur (4) présente une structure qui s'étend verticalement à partir du corps (1).

12. Dispositif de cuisson (O) selon la revendication 1, **caractérisé en ce que** la butée (2), l'oreille de retenue (3), le support supérieur (4), et le support inférieur (5), qui s'étend à partir du corps (1) sous forme de saillie, sont formés après que le corps (1) est coupé le long d'un gabarit, en cintrant la pièce coupée par rapport au corps (1) ou en cintrant au moins un côté du corps (1) directement.
